# EUROPEAN PATENT APPLICATION

(11) **EP 3 382 045 A1**
(43) Date of publication of application: **03.10.2018**
(21) Application number: 16886150.8
(22) Date of filing: 26.12.2016
(51) Int. Cl.: C22B 7/00, C22B 1/06, C22B 15/00, C22B 58/00, C01B 19/02, C25C 1/12

(54) **METHOD FOR RECYCLING COPPER INDIUM GALLIUM SELENIUM MATERIALS**

(30) Priority: 21.01.2016 CN 201610039562
(71) Applicant: Hanergy New Material Technology Co., Ltd., Yanqi Industrial Development Zone Huairou District Beijing 101407 (CN)
(72) Inventor: GAO, Yongtao, Beijing 100107 (CN); LIU, Junfei, Beijing 100107 (CN); WANG, Guan, Beijing 100107 (CN); WU, Guofa, Beijing 100107 (CN); PENG, Kan, Beijing 100107 (CN)
(74) Representative: Cabinet Beau de Loménie
(86) International application number: PCT/CN2016/112142
(87) International publication number: WO 2017/124891

(57) **Abstract**

A method for recycling copper indium gallium selenium materials comprises the steps of sulphating roasting, acid dissolution, extraction and electrolysis of metal copper, production of a gallium hydroxide deposition, replacement of indium, and the like. In the method, deselenization is carried by using sulphating roasting, and residues after roasting are oxidizing slags capable of being directly subjected to acid dissolution, thereby reducing acid gas pollution; in addition, copper is extracted by using a copper extractant, the separation effect is good and costs are low, the extracted copper can be directly electrolyzed, so as to obtain high-purity metal copper; and in another aspect, in the method, alkali separation of gallium is carried out, separation between indium and gallium can be implemented by merely adjusting the pH of a solution, thereby resolving the problem of co-extraction in the extraction of indium and gallium and the separation between indium and gallium, the separation effect is good, the purities of obtained indium and gallium products are high.

## Description

### Technical Field

The present invention relates to a method for recovering copper indium gallium selenide photovoltaic components, in particular to a method for recovering copper indium gallium selenide materials.

### Background Art

Copper indium gallium selenide thin-film solar cells are favored by the market due to their many advantages. They have been the most interest in R&D, scaled production and application of thin-film solar cells in recent years. The absorption layer of copper indium gallium selenide solar cells has a chalcopyrite structure composed of four elements, i.e. copper, indium, gallium and selenium, in an optimum ratio. The absorbable spectrum has a broad wavelength range. In addition to the visible spectrum which can be absorbed by amorphous silicon solar cells, the spectrum can also cover the near-infrared region with a wavelength between 700 and 2000 nm, which means the longest duration in a day for power generation. The total power generation provided by copper indium gallium selenide thin-film solar cells per day is over 20% more than that provided by crystalline silicon solar cells of the same wattage level. Crystalline silicon cells are inherently characterized by light induced degradation: after a prolonged exposure to sunlight, their power generation performance will gradually diminish. In contrast, copper indium gallium selenide solar cells are free from light induced degradation and have high power generation stability. Crystal silicon solar cells have hot spots after power generation for a long period of time, resulting in reduced power generation and increased maintenance costs. In contrast, copper indium gallium selenide solar cells can adopt an internal connection structure, which can avoid the occurrence of this phenomenon and requires lower maintenance costs than crystalline silicon solar cells.

The methods for manufacturing copper indium gallium selenide thin-film solar cells include vacuum sputtering, distillation and non-vacuum coating. No matter which manufacturing method is used, some copper indium gallium selenide materials may be produced during the manufacturing process. These materials contain rare metals such as indium, gallium and selenium, in addition to heavy metal copper. To help the continued use of rare metals such as indium, gallium and selenium and heavy metal copper, they need to be separated and separately recovered to facilitate further recycling, to ensure the sustainable development of copper indium gallium selenide thin-film solar cell materials. In the prior art, the main methods for recovering copper indium gallium selenide materials are combined wet or pyrometallurgical refining methods such as acid dissolution, extraction, oxidative distillation, etc.

Chinese patent application publication No. CN102296178A discloses a method for recovering copper indium gallium selenide, and specifically discloses a method of dissolving metal powders containing copper indium gallium selenide by a mixture of hydrochloric acid and hydrogen peroxide. This method uses hydrazine to reduce selenium, uses metal indium to replace copper, and separates indium from gallium by a combination of a supported liquid membrane and a dispersed stripping solution.

Chinese patent application publication No. CN103184388A discloses a method for recovering copper indium gallium selenide. In the method, the copper indium gallium selenide thin-film solar panels are first crushed into pieces, which are then soaked in a soaking process with a mixed system of sulfuric acid and hydrogen peroxide under a specified temperature for a specified time to give the soaking solution. Indium, gallium and selenium elements are then recovered by processes such as extraction, reverse extraction, electrolysis, and the like.

U.S. Patent No. 5,779,877 discloses a method for recovering copper indium selenide solar cell materials. The method mainly includes crushing, leaching with nitric acid, separating copper, selenium and indium with dual-electrode electrolysis, obtaining a mixture of indium and zinc oxides by evaporation and decomposition, and separating copper and selenium by oxidative distillation.

In the above-mentioned prior art techniques, leaching with hydrochloric acid and hydrogen peroxide would consume a large amount of oxidants. In addition, hydrochloric acid is volatile. The leaching reaction is an exothermic reaction, resulting in volatilization of a large amount of hydrochloric acid and relatively serious pollution. At the same time, the extractant used for extracting indium leads to a phenomenon of co-extraction of gallium, which makes it difficult to separate indium from gallium, thereby reducing the recovery rate of gallium. On the other hand, the method of replacing copper with indium leads to very high production costs.

### Summary of Invention

To solve the above-mentioned defects in the prior art, the present invention aims to provide a method for recovering copper indium gallium selenide material which can reduce environmental pollution and has high indium recovery rate and lower production cost.

The method for recovering copper indium gallium selenide material according to the present invention adopts sulphation roasting to remove selenium, and the residue after roasting is an oxidized residue, which can be directly dissolved by an acid, thereby reducing acid gas pollution. At the same time, a copper extractant is used for copper extraction. The separation effect is good and the cost is low. The extracted copper is directly electrolyzed to give high-purity copper metal. On the other hand, indium and gallium are separated under basic conditions by making use of the zwitterionic nature of gallium. Gallium can be dissolved by an excess amount of an alkaline solution to generate sodium gallate, while indium is still present in the form of indium hydroxide precipitate. Separation of indium from gallium can be achieved by solid-liquid separation, so as to solve the problem of co-extraction in the separation of indium and gallium by extraction and greatly improve the recovery rate of indium and gallium.

The method for recovering copper indium gallium selenide material according to the present invention includes the following steps.

In step A, the copper indium gallium selenide material is placed in a ball mill for ball milling.

In step B, the powders obtained in step A are mixed uniformly with concentrated sulfuric acid and roasted to 750 °C, followed by blowing air into the mixture. The gas is then absorbed with a secondary suction filter flask. The following reactions are involved during the roasting and selenium removal process:

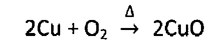

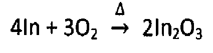

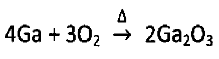

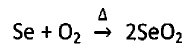

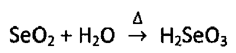

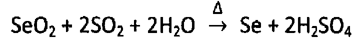

In step C, the amount of selenium in the residue after roasting is detected. If it exceeds a predetermined value, a secondary re-roasting is performed. The final residue after roasting is directly dissolved by diluted sulfuric acid. The dissolution process involves the following reactions:

CuO + H₂SO₄ → CuSO₄ + H₂O

In₂O₃ + 3H₂SO₄ → In₂(SO₄)₃ + H₂O

Ga₂O₃ + 3H₂SO₄ → Ga₂(SO₄)₃ + H₂O

In step D, the dissolved mixture is filtered, followed by adding a sodium hydroxide solution to adjust the pH to 1.8 and extracting copper.

In step E, the obtained stripping solution is a copper sulfate solution, which may be directly electrolyzed to give copper metal.

In step F, an appropriate amount of a sodium hydroxide solution is added to the residue after copper extraction to adjust the pH value to above 13, followed by stirring at a constant temperature and then allowing it to stand. The supernatant, which is a sodium gallate solution, is drawn, washed and settled and then directly filtered to give indium hydroxide precipitate. The following reactions are involved:

6NaOH + In₂(SO₄)₃ → 3Na₂SO₄ + 2In(OH)₃

6NaOH + Ga₂(SO₄)₃ → 3Na₂SO₄ + 2Ga(OH)₃

Ga(OH)₃ + OH⁻ → GaO₂ + 2H₂O

In step G, a sulfuric acid solution is added to the sodium gallate solution to adjust the pH value to neutrality, followed by adding polyacrylamide and stirring at a constant temperature to allow flocculation and precipitation. After washing and settling, gallium hydroxide precipitate is obtained by direct filtration, which is placed in a drying oven and dried at a constant temperature, followed by heating in a muffle furnace to give gallium oxide. The following reaction is involved:

GaO₂⁻ + H⁺+H₂O → 2Ga(OH)₃

In step H, the indium hydroxide precipitate is reversely dissolved by hydrochloric acid, followed by adjusting the pH to 1.5, heating up and stirring at a constant temperature. The mixture is replaced with a 4N zinc plate, followed by washing and filtering to give sponge indium. The following reactions are involved:

In(OH)₃ + 3HCl → InCl₃ + 3H₂O

3Zn + 2InCl₃ → 3ZnCl₂ + 2In

The method for recovering copper indium gallium selenide material according to the present invention further comprises in step A that the copper indium gallium selenide material is placed in a ball mill and ball milled to powders of below 120 mesh and dried at 100 °C for 4 hours.

The method for recovering copper indium gallium selenide material according to the present invention further comprises in step B that the concentration of the concentrated sulfuric acid is 95 to 98 %, and the components are mixed and stirred at a liquid-solid ratio of 1:1 and roasted for 6 hours.

The method for recovering copper indium gallium selenium material according to the present invention further comprises in step C that the concentration of the diluted sulfuric acid is 10%, the mixture is conventionally stirred at room temperature, and the dissolution lasts for 30 minutes.

The method for recovering copper indium gallium selenium material according to the present invention further comprises in step D that the concentration of the sodium hydroxide solution is 8 mol/L, AD-100N is selected as the extractant, which is diluted to 30% with sulfonated kerosene and then used to extract the original solution at a ratio of 1:1, and a total of 10 extractions are performed.

The method for recovering copper indium gallium selenide material according to the present invention further comprises that the electrolysis conditions in step E are: current, 1.5 A; voltage, 2.0 V; electrode spacing, 25 mm; electrode plate area, 50 mm × 50 mm; single cathode and dual anode configuration; duration of electrolysis, 6 hours.

The method for recovering copper indium gallium selenium material according to the present invention further comprises in step F that the pH value is adjusted to above 13 with an 8 mol/L sodium hydroxide solution, followed by heating to a temperature of 80 °C, and the mixture is stirred at a stirring rate of 200 r/min and at a constant temperature for 20 min, followed by standing for 2 hours and then drawing the supernatant.

The method for recovering copper indium gallium selenide material according to the present invention further comprises in step G that a 1 mol/L sulfuric acid solution is added to the sodium gallate solution to adjust the pH to neutrality, followed by adding 20 ml diluted 10% polyacrylamide, maintaining the temperature at 80 °C, stirring at a stirring rate of 200 r/min and at a constant temperature for 10 min to allow flocculation and precipitation. After precipitation, the supernatant is drawn.

The method for recovering copper indium gallium selenium material according to the present invention further comprises in step G that the supernatant is drawn after repeating the washing and settling procedure three times, in which the amount of water used for each washing does not exceed 1 L, and gallium hydroxide precipitate is finally obtained by direct filtration. Gallium hydroxide is placed in a drying oven and dried at a constant temperature of 80 °C for more than 8 hours, followed by heating in a muffle furnace to 700 °C and keeping at a constant temperature for 2 hours to give gallium oxide.

The method for recovering copper indium gallium selenide material according to the present invention further comprises in step H that the indium hydroxide precipitate is reversely dissolved by 600 ml of 10% hydrochloric acid, followed by adjusting the pH to 1.5, heating to 55 °C and stirring at a constant temperature and at a stirring rate of 200 r/min.

### Brief Description of Drawings

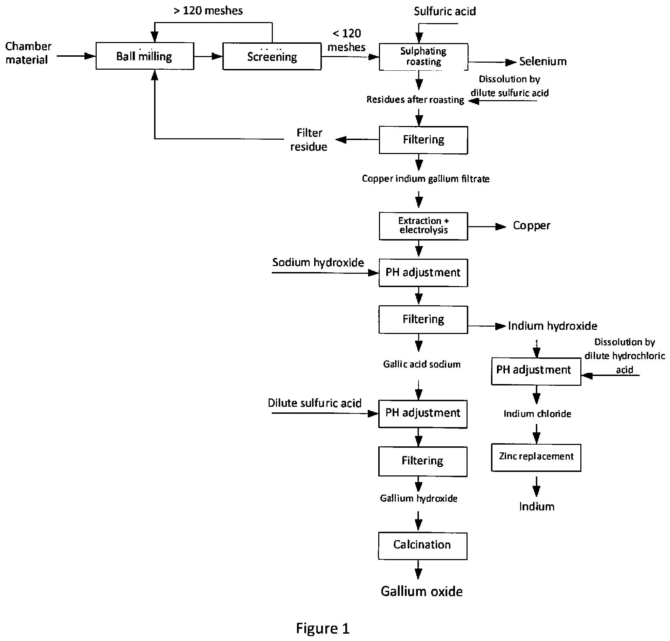

Figure 1 is a schematic diagram of the method for recovering copper indium gallium selenide material according to the present invention.

### Specific Embodiments

The embodiments of the present invention are further illustrated below with reference to the accompanying drawings.

In step A, 400 g of copper indium gallium selenide material was placed in a ball mill, ball milled to powders of below 120 mesh and dried at 100 °C for 4 hours.

In step B, the powders obtained in step A were mixed uniformly with 98% concentrated sulfuric acid at a liquid-solid ratio of 1:1. The mixture was roasted to 750 °C, followed by blowing air into the mixture. The gas was absorbed with a secondary suction filter flask. The roasting lasted for 6 hours.

In step C, the amount of selenium in the residue after roasting was detected. If it exceeds a predetermined value, a secondary re-roasting was performed. The final remaining residue after roasting was directly dissolved by 10% diluted sulfuric acid and stirred conventionally at room temperature. The dissolution lasted for 30 minutes.

In step D, the dissolved mixture was filtered, followed by adding an 8 mol/L sodium hydroxide solution to adjust the pH value to 1.8 and extracting copper. AD-100N was selected as the extractant, which was diluted to 30% with sulfonated kerosene and then used to extract the original solution at a ratio of 1:1. A total of 10 extractions were performed.

In step E, the obtained stripping solution is a copper sulfate solution, which can be directly electrolyzed, and the electrolysis conditions are as follows: current, 1.5 A; voltage, 2.0 V; electrode spacing, 25 mm; electrode plate area 50 mm × 50 mm; single cathode and dual anode configuration; duration of electrolysis, 6 hours.

In step F, an appropriate amount of an 8 mol/L sodium hydroxide solution was added to the residue after copper extraction to adjust the pH value to above 13, followed by heating to a temperature of 80 °C. The mixture was stirred at a stirring rate of 200 r/min and at a constant temperature for 20 minutes. The supernatant was drawn after the mixture was allowed to stand for 2 hours. The supernatant was a sodium gallate solution. The supernatant was drawn after repeating the washing and settling procedure three times, in which the amount of water used for each washing did not exceed 1 L. Finally, indium hydroxide precipitate was obtained by direct filtration.

In step G, a 1 mol/L sulfuric acid solution was added to the sodium gallate solution to adjust the pH to neutrality, followed by adding 20 ml diluted 10% polyacrylamide. The temperature was maintained at 80 °C, while stirring at a rate of 200 r/min and at a constant temperature for 10 min to allow flocculation and precipitation. After precipitation, the supernatant was drawn. Similar to the procedure in step F, the supernatant was drawn after repeating the washing and settling procedure three times, in which the amount of water used for each washing does not exceed 1 L. Finally, gallium hydroxide precipitate was obtained by direct filtration. Gallium hydroxide was placed in a drying oven and dried at a constant temperature of 80 °C for more than 8 hours, followed by heating in a muffle furnace to 700 °C and keeping the temperature for 2 hours to give gallium oxide.

In step H, the indium hydroxide precipitate is reversely dissolved by 600 ml of 10% hydrochloric acid, followed by adjusting the pH to 1.5, heating to 55 °C and stirring at a constant temperature and at a stirring rate of 200 r/min. The mixture is replaced with a 4N zinc plate for 6 hours, followed by washing and filtering to give sponge indium.

The above embodiments are only used to specifically illustrate the present invention. They do not impose any limit to the scope of protection of the present invention, which is determined by the claims. Many variants can be deduced or conceived according to well-known technologies in the art and the technical solution disclosed herein. All these variants should also be considered within the protection scope of the present invention.

## Claims

1. A method for recovering copper indium gallium selenide material, including the following steps:
step A, in which the copper indium gallium selenide material is placed in a ball mill for ball milling;
step B, in which the powders obtained in step A are mixed uniformly with concentrated sulfuric acid and roasted to 750 °C, followed by blowing air into the mixture; and selenium is removed by absorbing with a secondary suction filter flask;
step C, in which the amount of selenium in the residue after roasting is detected, if it exceeds a predetermined value, a secondary re-roasting is performed; the final residue after roasting is directly dissolved by diluted sulfuric acid;
step D, in which the dissolved mixture is filtered, followed by adding a sodium hydroxide solution to adjust the pH to 1.8 and extracting copper;
step E, in which the obtained stripping solution is a copper sulfate solution, which is electrolyzed to give copper metal;
step F, in which an appropriate amount of a sodium hydroxide solution is added to the residue after copper extraction to adjust the pH value to above 13, followed by stirring at a constant temperature, allowing it to stand and drawing the supernatant, which is a sodium gallate solution, which is washed and settled and then filtered to give indium hydroxide precipitate;
step G, in which a sulfuric acid solution is added to the sodium gallate solution to adjust the pH value to neutrality, followed by adding polyacrylamide and stirring at a constant temperature to allow flocculation and precipitation; after washing and settling, gallium hydroxide precipitate is obtained by direct filtration, which is placed in a drying oven and dried at a constant temperature, followed by heating in a muffle furnace to give gallium oxide; and
step H, in which the indium hydroxide precipitate obtained in step F is reversely dissolved by hydrochloric acid, followed by adjusting the pH to 1.5, heating up and stirring at a constant temperature; and the mixture is replaced with a 4N zinc plate, followed by washing and filtering to give sponge indium.

2. The method for recovering copper indium gallium selenide material according to claim 1, further comprising in step A that the copper indium gallium selenide material is placed in a ball mill and ball milled to powders of below 120 mesh and dried at 100 °C for 4 hours.

3. The method for recovering copper indium gallium selenide material according to claim 1, further comprising in step B that the concentration of the concentrated sulfuric acid is 95 to 98 %, and the components are mixed and stirred at a liquid-solid ratio of 1:1 and roasted for 6 hours.

4. The method for recovering copper indium gallium selenide material according to claim 1, further comprising in step C that the concentration of the diluted sulfuric acid is 10%, the mixture is conventionally stirred at room temperature, and the dissolution lasts for 30 minutes.

5. The method for recovering copper indium gallium selenide material according to claim 1, further comprising in step D that the concentration of the sodium hydroxide solution is 8 mol/L, AD-100N is selected as the extractant, which is diluted to 30% with sulphated kerosene and then used to extract the original solution at a ratio of 1:1, and a total of 10 extractions are performed.

6. The method for recovering copper indium gallium selenide material according to claim 1, further comprising that the electrolysis conditions in step E are as follows: current, 1.5 A; voltage, 2.0 V; electrode spacing, 25 mm; electrode plate area, 50 mm × 50 mm; single cathode and dual anode configuration; duration of electrolysis, 6 hours.

7. The method for recovering copper indium gallium selenide material according to claim 1, further comprising in step F that the pH value is adjusted to above 13 with an 8 mol/L sodium hydroxide solution, followed by heating to a temperature of 80 °C, and the mixture is stirred at a stirring rate of 200 r/min and at a constant temperature for 20 min, followed by standing for 2 hours and then drawing the supernatant.

8. The method for recovering copper indium gallium selenide material according to claim 1, further comprising in step G that a 1 mol/L sulfuric acid solution is added to the sodium gallate solution to adjust the pH to neutrality, followed by adding 20 ml diluted 10% polyacrylamide, maintaining the temperature at 80 °C, stirring at 200 r/min and at a constant temperature for 10 min to allow flocculation and precipitation and then drawing the supernatant.

9. The method for recovering copper indium gallium selenide material according to claim 1, further comprising in step G that gallium hydroxide is placed in a drying oven and dried at a constant temperature of 80 °C for more than 8 hours, followed by heating in a muffle furnace to 700 °C and keeping at a constant temperature for 2 hours to give gallium oxide.

10. The method for recovering copper indium gallium selenide material according to claim 1, further comprising in step H that the indium hydroxide precipitate is reversely dissolved by 600 ml of 10% hydrochloric acid, followed by adjusting the pH to 1.5, heating to 55 °C and stirring at a constant temperature and at a stirring rate of 200 r/min.
